# EUROPEAN PATENT SPECIFICATION

(11) **EP 2 994 403 B1**
(45) Date of publication and mention of the grant of the patent: **26.07.2017**
(21) Application number: 14728334.5
(22) Date of filing: 08.05.2014
(51) Int. Cl.: B65G 59/02, B65G 61/00, B65G 47/90

(54) **METHOD AND APPLIANCE FOR REPALLETIZING SHRINK-WRAPPED PACKS OF PLASTIC BOTTLES**
VERFAHREN UND VORRICHTUNG ZUR PALETTENVERLADUNG EINGESCHWEISSTER PACKUNGEN VON KUNSTSTOFFFLASCHEN
PROCÉDÉ ET APPAREIL DE REPALETTISATION DE PACKS DE BOUTEILLES EN PLASTIQUE EMBALLÉS SOUS FILM RÉTRACTABLE

(30) Priority: 10.05.2013 IT MO20130124; 06.09.2013 IT MO20130246
(43) Date of publication of application: 16.03.2016
(73) Proprietor: SIR S.P.A., 41122 Modena (IT)
(72) Inventor: PASSONI, Luciano, I-41122 Modena (IT)
(74) Representative: Luppi, Emanuele
(86) International application number: PCT/IB2014/061297
(87) International publication number: WO 2014/181285

(56) References cited:
- EP-A1- 0 181 993
- EP-A1- 0 244 050
- EP-A1- 1 340 700
- DE-A1-102008 035 330
- JP-A- S59 149 234
- US-A1- 2007 272 515
- US-A1- 2007 280 812

## Description

### Technical Field

The present invention relates to a method for repalletizing packs of plastic bottles.

### Background Art

A current trend of retail companies, above all within large-scale organized distribution, is to reduce surface areas used as internal warehouse, and therefore linked logistic facilities, for clearly money-saving reasons.

For such purpose, these companies avail themselves of third-party warehouses and logistics, each of which serves a plurality of retailers.

These third-party warehouses comprise very vast interiors, fundamentally split into primary warehouses and secondary warehouses.

To the primary warehouse pertain the goods packed on single-product pallets, which undergo repalletizing procedures, so as to create multiproduct pallets, the composition of which is based on the requests of the single retailer (e.g., a supermarket).

In particular, repalletizing also concerns packed plastic bottles.

The packed plastic bottles are arranged on the relative single-product pallets in superimposed layers, often with separation elements, such as cardboard interlayer pads or the like, in between.

Each layer comprises a plurality of packs, the number and arrangement of which are determined by the size of the pallet, according to specific standards.

Once the pallet of shrink-wrapped plastic bottles has been freed of the shrink-wrap films, or any other retention means used to keep the packs together, suction grip means start to operate (normally moved by robots or the like) which pick up a whole layer at a time from the pallet and position it on a support, e.g., a pallet or the like.

At this point, one or more operators manually take a certain number of packs from the picked-up layer, according to the order of a distributor, and they arrange them suitably in a stack of goods, naturally loaded on a pallet, and this stack will go to make up the multiproduct pallet commissioned by that distributor.

The remaining packs are sent to one of the secondary warehouses, where they are stocked until they themselves have to be used to form further multiproduct pallets.

This system is too expensive both because the use of secondary warehouses implies the occupation and management of extremely large surface areas inside the above third-party warehouses, and because the use of dedicated labor involves high costs, apart from the fact that it does in fact represent a bottleneck in a system the rest of which is automated. JP 59149234 discloses a method according to the preamble of claim 1.

### Description of the Invention

The main aim of the present invention is to provide a method for repalletizing packs of plastic bottles which permit forming multiproduct pallets, starting with single-product pallets comprising said bottles, avoiding the use of the above secondary warehouses.

Within this aim, an object of the invention is to provide a method and an appliance for repalletizing packs of plastic bottles which allow doing without the manual action of operator personnel or totally doing without labor.

Another object of the invention is to provide a method and an appliance for repalletizing packs of plastic bottles which allow to overcome the mentioned drawbacks of the prior art in the ambit of a simple, rational, easy and efficient to use as well as low cost solution.

The above mentioned objects are achieved by the present method for repalletizing shrink-wrapped of plastic bottles, according to claim 1.

### Brief Description of the Drawings

Other characteristics and advantages of the present invention will become evident from the description of several preferred, but not exclusive embodiments, of a method and an appliance for repalletizing packs of plastic bottles, illustrated by way of an indicative, but not limitative, example in the accompanying drawings in which:
figures 1, 2 and 3 are lateral views of the appliance according to the invention, used to handle packs of a source pallet, in different moments of the embodiment of the method according to the invention;
figure 4 is a lateral view of the appliance according to the invention, in a phase of the method according to the invention wherein it has picked up a pack from the source pallet, comprising bottles of different size than those shown in the previous illustrations;
figure 5 is a lateral view of the appliance according to the invention that picks up a pack from the source pallet, during a phase of the method according to the invention, complying with a particular gripping mode;
figure 6 and figure 7 are lateral views of the appliance which loads on a client pallet a respective pack, of different size, picked up from the source pallet, according to a mode of the method according to the invention which takes into account the presence of walls of products;
figure 8 shows a phase of the method according to the invention, wherein a suction grip device of the appliance takes a separation element arranged between two layers of the source pallet;
figure 9 shows the use in the method according to the invention of an acquisition device of the images to detect the arrangement of packs in a layer of the source pallet; figure 10 shows a lateral view in vertical section of a lower portion of the appliance according to the invention in one of its particular embodiments;
figure 11 is a lateral view of the appliance according to the invention, in a further particular embodiment; and
figures 12 - 15 are schematic views from the top of the source and client pallets showing phases of embodiment of the method according to the invention.

### Embodiments of the Invention

The method of the invention is particularly intended for use in the above-mentioned third-party warehouses, in which single-product pallets 1 arrive, made up of said shrink-wrapped plastic bottles 2, which hereinafter will be called "source pallet" 1. Notice that in the present description, by the word "pallet" reference is made to the parcel comprising both the pallet and the products supported on it, and not to the pallet alone.

Furthermore, by the word "pack" 3, reference is made to the entire assembly made up of a group of plastic bottles and of the film (normally shrink-wrap) holding the entire assembly together, and not to the film alone.

The shrink-wrapped packs 3 are known to have a substantially prismatic shape and a substantially rectangular perimeter.

The invention has been devised to repalletize the shrink-wrapped plastic bottles 2, i.e., according to the meaning given by the present description, to pick up the shrink-wrapped packs 3 from the source pallet 1 and arrange them on one or more multiproduct pallets 4 (hereinafter "client pallet"), in a number established by the order placed by the retailers for whom the client pallets 4 themselves are intended. Consequently, during repalletizing, as will be seen in detail below, we have, at the same time, de-palletizing and palletizing of the shrink-wrapped packs 3, i.e., advantageously, for the first time it is possible to perform a direct "pick and place" operation between the source pallet 1 and client pallets 4, within the ambit of the shrink-wrapped plastic bottles 2.

Such bottles 2 are normally made of polyethylene terephthalate (PET) and can be made available in different sizes (an aspect we shall come back to in a subsequent paragraph), and contain water or other drinks.

The source pallet 1 comprises a plurality of superimposed layers (i.e., stacked), each consisting of a plurality of shrink-wrapped packs 3, to define a top layer and a bottom layer.

In theory, the method can also work in the event of the source pallet 1 including only one layer, though this is a case which does not occur in practice.

In any case, the source pallet 1 is presented to the warehouse (and is therefore made available for the proposed method) comprising a layer accessible from the top, whether this be the top layer or the only layer.

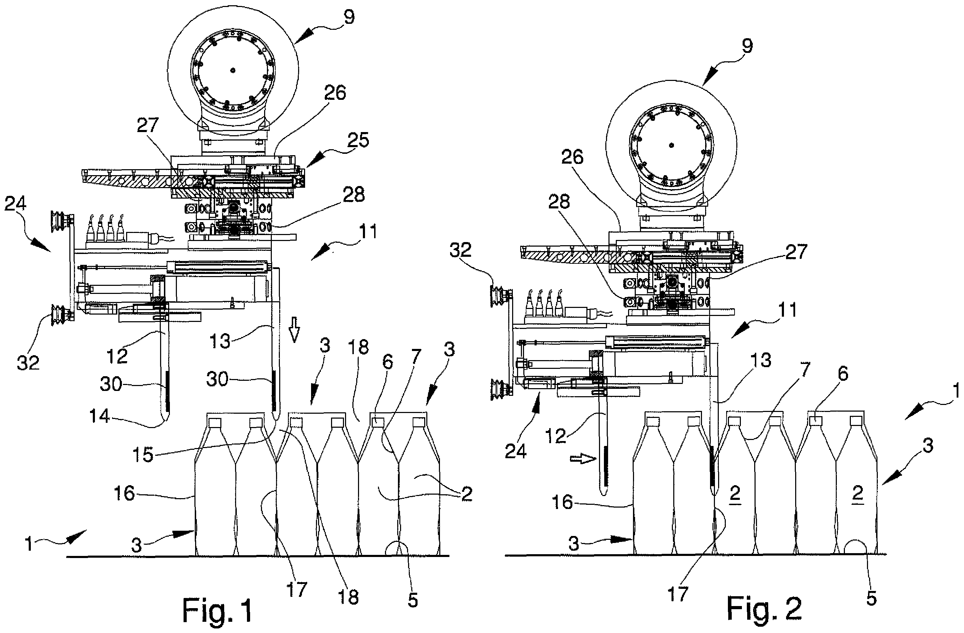

For reasons of illustrative simplicity, in the figures 1 - 5 and 9, the source pallet 1 is approximately represented by such accessible layer, which is schematically shown by two or three adjacent packs 3 (see for example the figure 1).

Notice that the phases of the method of the invention illustrated below refer to the source pallet 1 without (or already deprived of) the shrink-wrap films or other outer wrappings.

Each pack 3 of each layer, before repalletizing, is adjacent to other packs 3, for space optimization reasons, and is arranged with respect to the other packs in positions and orientations that take into account their size, the number of their bottles 2 and the size of the respective source pallet 1, on the basis of related standards, as any expert in the field is well aware.

Clearly, the bottles 2 are arranged in the layer with the bottom 5 below and the cap 6 at top (see in particular the figures 1 and 2), at which cap 6, the bottles 2 present the respective neck 7, tapered upwards, which is an aspect of interest for the present method.

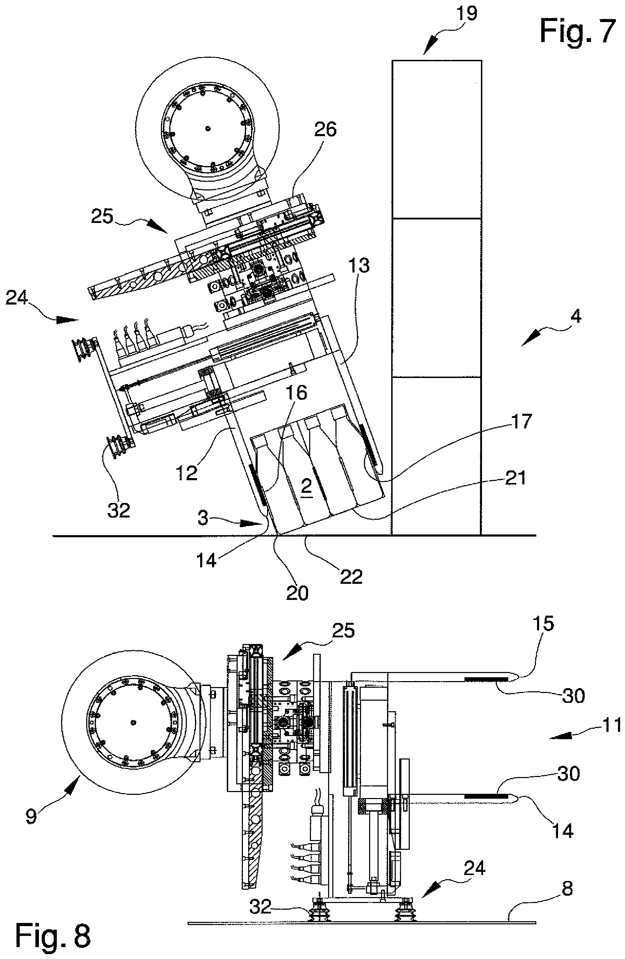

Typically, the layers of the source pallet 1 are intercalated by sheet-shaped separation elements 8, usually cardboard sheets 8, one of which is shown in the figure 8, which is a further aspect taken into account by the present method, as will be made clear afterwards.

As has been said, the shrink-wrapped packs 3 of the source pallet 1 are preferably distributed to several client pallets 4, because various retailers (think of minimarkets) order client pallets 4 with a specific composition of goods, in particular, a specific number of packs 3 taken from the common source pallet 1.

To do this, handling means are provided comprising an anthropomorphous robot 9 and a gripper 11, carried by said robot 9, equipped with two plate-shaped jaws 12, 13. Anthropomorphous robots are known in the sector and comprise an articulated arm having at least three degrees of freedom, which arm terminates at an attachment member provided to carry the gripper (and if necessary other devices, as will be seen) which defines, so to speak, the "wrist" of the arm, if the gripper 11 is considered as the "hand" of the handling means 9, 11.

In this case, the gripper 11 is an interchangeable grip means, i.e., a so-called "end effector".

On the attached tables, the robot 9 of the invention is approximately shown by its attachment member, but this should be deemed as a mere choice of the representative kind and is not limiting within the scope of the invention.

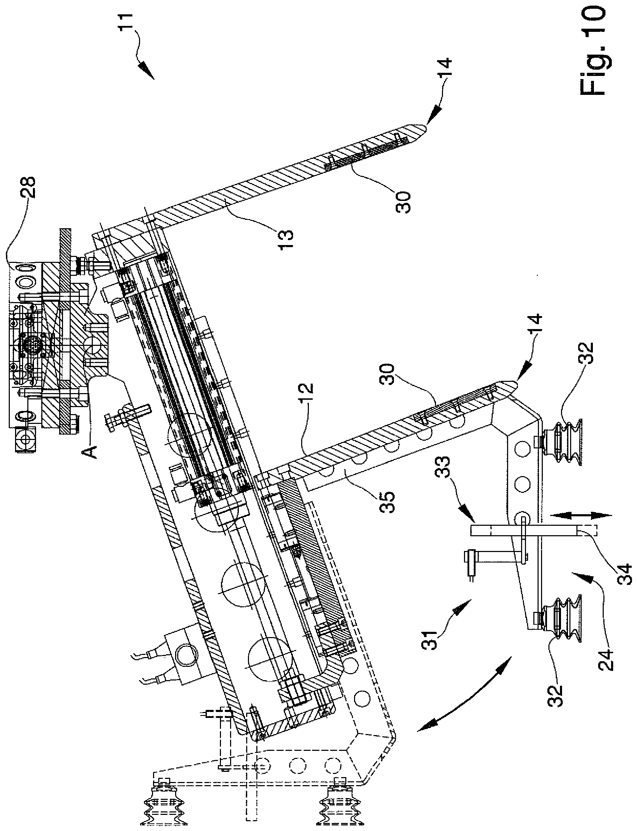

The gripper 11 can then be suitable for rotating with respect to the prefixed axes which pass either at the attachment member 9 or cross the gripper 11 itself at any hinge or joint (as in the particular embodiment shown in figure 10).

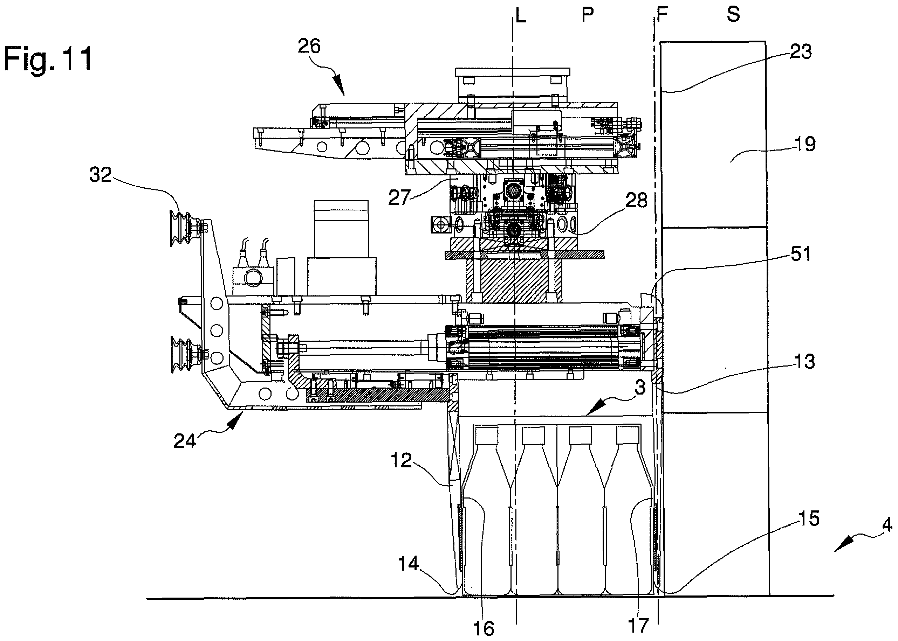

In detail, the gripper can be suitable for being able to rotate around one of its central axes L substantially parallel to the jaws 12, 13, and in use arranged vertically, as shown in the figure 11.

In practice, the attachment member can also act as a means to rotate the gripper 11 with respect to the arm; in addition, or alternatively, the gripper 11 can rotate around one or more of its own axes A.

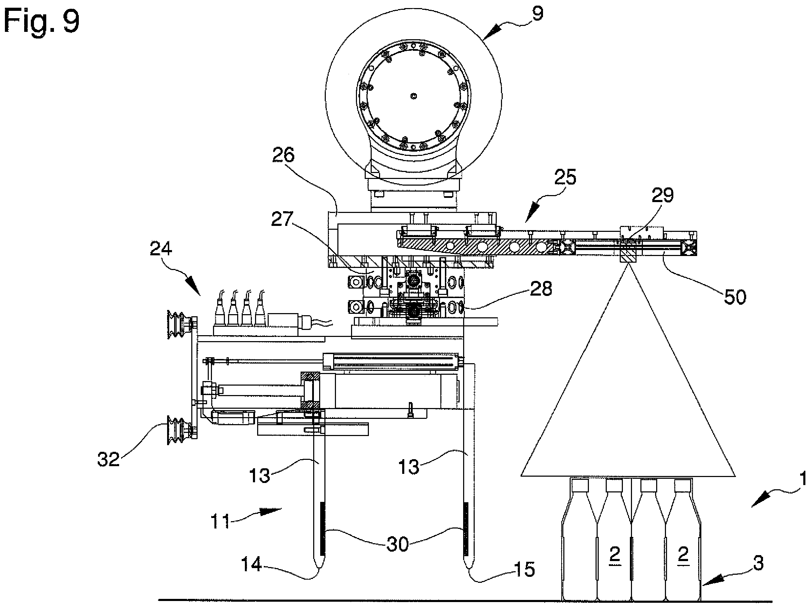

The jaws 12, 13 are substantially parallel or slightly converging towards their free extremity 14, 15, and are suitable for moving in reciprocal approach or divarication. Optionally, on the inner surfaces of the jaws 12, 13 which face one another, are portions 30 with high friction coefficient, scabrous or in rubber material or both things together (see for example figure 1 and figure 9).

Preferably, a jaw 12 is mobile, and the other jaw 13 is fixed with respect to the rest of the gripper 11.

In a particular embodiment of the gripper 11, shown in figure 11, it comprises a thinner jaw 13 and a thicker jaw 12.

Preferably, the thinner jaw 13 is the fixed jaw.

The movement of the mobile jaw 12 can be implemented by means of pneumatic means or, preferably, by means of power actuators or again by means of other movement means known in the sector, and not therefore delved into in the present description.

Because the handling means 9, 11 have to move repeatedly to pick up packs 3 from the source pallet 1 and load them onto the various client pallets 4 presented to it, it is preferable that the robot of the invention be operative at round angle.

The method of the invention provides for the phase of identifying, in the above layer accessible from above, a shrink-wrapped pack 3 to be picked up, which has opposite grip sides 16, 17, i.e., the sides intended to be abutted by the jaws 12, 13 during pickup.

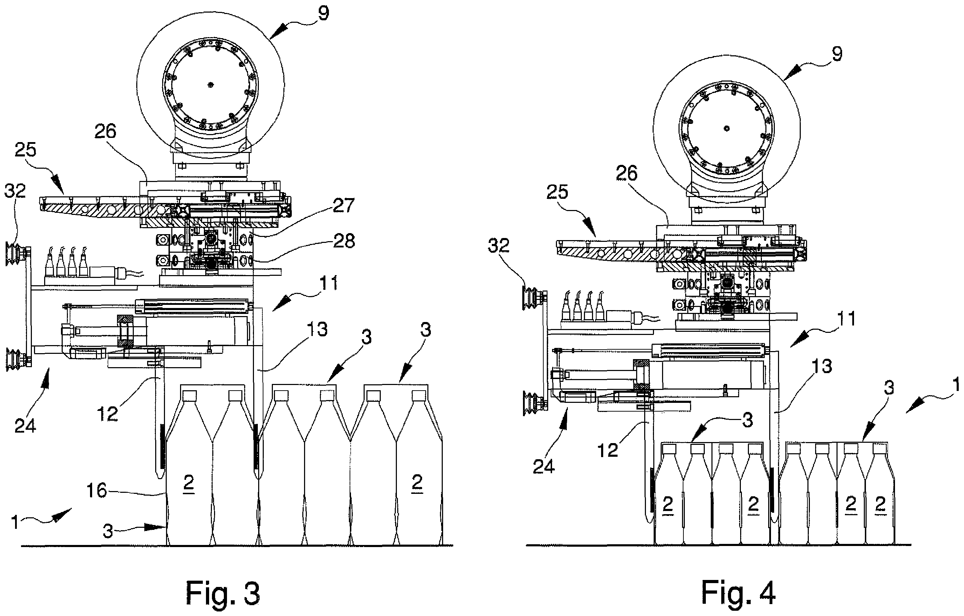

In detail, the shrink-wrapped pack 3 to be picked up can comprise small bottles (which is the case of the figures 4, 7 and 9), i.e., of a size below one liter, or bottles of above one liter, as in the figures 1, 2, 3, 5 and 6.

In both cases, the grip sides 16, 17 of the pack 3 to be picked up are preferably defined by its longer sides.

The identification of the pack 3 to be picked up can be preceded by a phase of detection of the position of the packs 3 in the layer, account of which will be given after explaining in detail the fundamental steps of the method of the invention.

The gripper 11 is arranged over the shrink-wrapped pack 3 to be picked up, preferably in a divaricated configuration in which the jaws 12, 13 are separated from one another more than the distance between the two grip sides 16, 17 of the pack to be taken. Then, as shown in the figure 1, the gripper 11 is lowered to grip the pack 3, and this is done in a way following the steps explained below.

First of all, shrink-wrapped packs 3 are always picked up which have at least a free grip side 16, 17, i.e., not adjacent to a side of other shrink-wrapped packs 3.

In practice, therefore, the first pack 3 picked up is always one of the perimeter packs 3 of the layer, i.e., one of its outermost packs 3 defining the periphery of the layer.

The packs 3 subsequently picked up can be both perimeter packs 3 and packs 3 initially arranged inside the layer, a grip side 16, 17 of which has become free, i.e., in practice laterally accessible, following the previous removal of one or more outer packs 3.

In any case, if the shrink-wrapped pack 3 to be picked up has a first free grip side 16 and the second grip side 17 adjacent to an extraneous pack (i.e., different from that to be taken), then a jaw 13, during the descent movement of the gripper 11, is forcibly fitted between the second side 17 and the extraneous pack (i.e., one of the sides of the latter), with such jaw 13 which is parallel to the second side 17 itself (see figure 2). This is favored both by the yielding capacity and elasticity of the plastic bottles 2 and of the film that wraps around the respective pack 3, and by the presence of an upper flaring 18, defined by the necks 7 of the bottles which belong to two adjacent packs 3, and shown in particular in the figures 1 and 2.

In fact, considering that each neck 7 tapers towards the respective cap 6, and is wrapped in adherence by the film, then two adjacent packs 3 define with one another, in the proximity of the top, a flaring 18 turned upwards with V shape (but which can have different shapes according to the appearance of the neck 7 of the shrink-wrapped bottles 2).

Consequently, the presence of the flaring 18 helps permit a fluid insertion of said jaw 13 between two different shrink-wrapped packs 3, without the respective bottles 2 or the respective films being damaged.

The forceful thrust of the jaw 13 between the pack 3 to be picked up and an adjacent one produces an albeit small divarication between these shrink-wrapped packs 3, and in practice singularizes the pack 3 to be picked up.

At this point, the other jaw 12 abuts with the above first side 16, i.e., the free side, to clasp the pack 3 to be picked up in the gripper 11 (figures 3, 4 and 5).

Even more in detail, in the preferential case in which the gripper 11 comprises a fixed jaw 13 and a mobile jaw 12, the action of the previous paragraph can be performed in two different ways according to two possible situations.

In the most simple situation, shown in the figure 2, wherein the jaw 13 forcibly pushed along the second grip side 17 is the fixed jaw, then, after insertion, the mobile jaw 12, which was initially spaced away, is moved towards the shrink-wrapped pack 3 until it abuts with the first grip side 16, to define a grip configuration of the gripper which is like that shown in the figures 3 and 4.

Alternatively, if the jaw forcibly pushed between the shrink-wrapped pack 3 to be taken and an extraneous one is the mobile jaw 12, then, for the fixed jaw 13 to approach the first side 16, the gripper 11 must be moved by the robot 9 towards the aforementioned extraneous pack, while the mobile jaw 12 is moved in the opposite direction, with the same stroke.

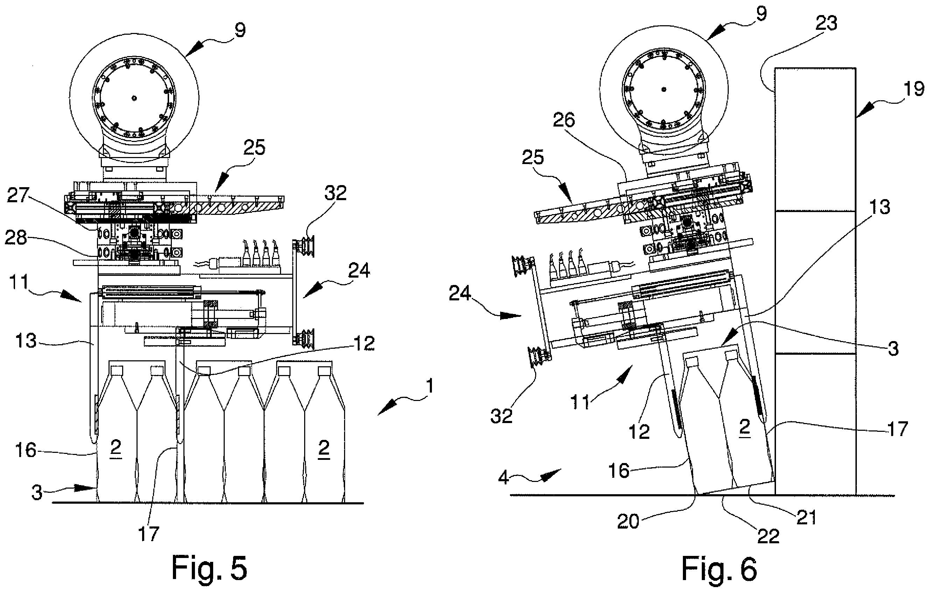

This way, in the same way, the firm grip is achieved of the shrink-wrapped pack 3 by the gripper 11, as can be seen in figure 5.

In the case, not shown, wherein, in a second or subsequent repalletizing cycle, the pack 3 identified for pickup, has both grip sides 16, 17 free, then each jaw 12, 13, once the gripper 11 has dropped far enough, abuts against a respective side, to clasp on said pack 3.

In detail, in this case, it is possible but not necessary for a jaw 12, 13 to be forcibly lowered substantially in the same ideal plane as one of the grip sides 16, 17, to adhere to it perfectly, and then for the other jaw 12, 13 to be brought in contact with the opposite side in one of the two ways explained above.

After the gripper 11 has taken the pack 3, it lifts it and removes it from the source pallet 1 and takes it to the client pallet 4, e.g., above it or in close proximity to the perimeter.

At this point, a load position is identified in the client pallet 4, intended to house the taken pack 3.

To make such identification, specific methods exist, and others can be provided, implemented in computer programs, installed in the computer that controls the handling means 9, 11.

At this point, the pack 3 is rested in said load position, according to different procedures.

In a first procedure, the pack is loaded by simply lowering and then opening the gripper 11, so as to release the shrink-wrapped pack 3.

Alternative procedures will be explained subsequently.

Unless the order placed by the retailer envisages a single pack 3 for its client pallet 4, the phases described above, starting with the identification of the pack 3 to be picked up from the source pallet 1 until the release of the shrink-wrapped pack 3 on the client pallet 4, are repeated cyclically until the above number of shrink-wrapped plastic bottles 2 is reached included in the order placed by the retailer.

The same goes for the case wherein the same anthropomorphous robot 9 serves various client pallets 4 at the same time, which have to contain the goods of the orders of other retailers, which are intended to receive the packs 3 which have reached the warehouse with the same source pallet 1 or with several source pallets 1. Furthermore, once all the shrink-wrapped plastic bottles 2 of the top layer have been repalletized, then the above indicated repalletizing steps are applied to the packs 3 of the layer underneath which becomes the new layer accessible from above (after, if necessary, the removal step of the above sheet of cardboard 8, by means of subsequently introduced means), and so on until the complete repalletizing of all the bottles 2 of the source pallet 1.

In practice, every time the bottles 2 of a layer have been repalletized, the layer that was previously arranged immediately below becomes the new top layer, until only what was the bottom layer remains.

From the explanation of the method presented above, it clearly appears that the method of the invention allows third-party warehouses to completely do without the secondary warehouses spoken of when describing the prior art.

In fact, because, using the proposed method, an intermediate palletizing of one layer of packs 3 is not necessary, it is the source pallet itself 1 which continues to accommodate the shrink-wrapped bottles 2 in the primary warehouse until these are repalletized in a client pallet 1.

Furthermore, the method has been provided so as to be able to have successful repalletizing achieved entirely automatically, no manual intervention at all being required from the warehouse personnel.

In the event of a wall 19 of products being present alongside the load position, defined by a number of stacked products, then loading is done according to a procedure described below.

The mentioned wall 19 of products, as shown in the figures 6 and 7, extends vertically and protrudes at the top with respect to the supporting base 22 of the pack 3.

By supporting base 22 is meant the horizontal surface, placed at the load position, which has to sustain the shrink-wrapped pack 3 once loaded on the client pallet 4, and which is defined either by its pallet or by the top of a layer of already-loaded goods. The wall 19 of products represents an obstacle that could hinder the collocation of the pack 3 on the client pallet 4.

In fact, considering the gripper 11 occupies a given space and has an irregular shape, the risk exists that, during the phase of resting the pack 3 in the respective load position, which is adjacent to the wall 19, a collision occurs between gripper and wall 19, with the consequent falling onto the ground of the goods stacked in the latter.

This accident would imply having to revert to the use of manual intervention to collect and reposition the goods themselves, or even to a very costly suspension of repalletizing.

To overcome these possible drawbacks, the proposed method envisages various solutions for loading the pack 3 in the case of the presence of walls 19 of products.

A first solution is explained below with the aid of the figures 6 and 7, which show the implemented phases of the method with regard to packs with large-size bottles and packs with small-size bottles respectively.

First of all, the gripper 11 is moved over the load position, in an inclined arrangement wherein the fixed jaw 13 is facing the wall 19.

In detail, to such arrangement of the gripper 11 corresponds a relative inclined arrangement of the pack 3, wherein this has a grip side 17 closer to the wall 19 and an opposite side 16 farther away, lying on planes that are oblique with respect to the wall 19, and wherein the shrink-wrapped pack 3 touches the client pallet 4 only along one of its corners 20 defined at the lower edge of its furthest away side 16, so that such corner is substantially parallel to the wall 19, i.e., to the vertical plane on which extends the wall 19 or on which lies its face 23 placed adjacent to the load position.

In geometric terms, it can be said that, when the pack 3 is in said inclined arrangement, its closest side 17 lies on a plane oblique to the plane of extension of the wall 19, which is vertical, to define with this substantially a band of own planes, i.e., a band of planes that originates from a straight line.

In any case, initially, the pack 3 only touches the load position with said lower corner, at a distance from the wall which is at least the distance between its two grip sides 16, 17 and which is preferably greater by a negligible amount.

At this point, the pack 3 rotates towards the wall 19, until it is positioned with the grip sides 16, 17 parallel to the wall 19, and clearly with its base bottom 21 linking below such sides 16, 17 horizontal and in contact with the supporting base 22.

To achieve this, preferably, the mobile jaw 12, abutted with the grip side 16 furthest away, is operated in away movement from such side 16.

At this moment, the pack 3 rests inclined because also resting against the fixed jaw 13; for this purpose, the inclination of the pack 3 is chosen in such a way that, once the mobile jaw has left it, it does not fall in the opposite direction to the wall onto its furthest grip side 16.

After which, the gripper 11 is raised detaching the fixed jaw 13 from the closest side 17 to the wall 19, to enable the pack 3 to rotate by gravity towards the wall 19 until it rests in support, with its base bottom 21, in said load position.

The second loading solution is preferably implemented by means of the gripper 11 in its version complete with thinner fixed jaw 13 as shown in figure 11.

The second solution envisages the gripper 11, bearing the pack 3 to be loaded, being first of all arranged above the load position.

In detail, the gripper 11 is oriented so the fixed jaw 13 is arranged on a substantially vertical plane adjacent to the above-mentioned face 23 of the wall 19.

In practice, the surface F on which lies the fixed jaw 13, which hereinafter is called front surface F, is arranged vertically and substantially at the plane on which is placed the face 23 of the wall adjacent to the load position.

The front surface F therefore passes along the perimeter of the load position.

At this point, the gripper 11 is lowered by translating it vertically until it places the pack 3 in the load position (see figure 11).

Because the jaw 13, which skims or is in any case facing the wall 19 of products, is thin, the pack 3 can be loaded in a position wherein it is as close as possible to the wall 19, so as to obtain highly efficient use of the space available on the client pallet 4.

Preferably, the gripper 11 of the invention is included in an appliance 11, 24, 25, 31 which comprises further components, described below, which is devised so that the above front surface F defines a first semi-space P which contains all the above-mentioned further components, and a second free semi-space S (see again figure 11). In practice, the appliance 11, 24, 25 does not comprise components that protrude beyond the front surface F within the second semi-space S.

Consequently, when the gripper 11 drops to load the pack 3, the wall 19 does not suffer knocks.

After the loading phase, the mobile jaw 12 moves away from the pack 3, leaving it in its load position.

Finally, the gripper 11 is raised vertically leaving the pack 3 on the client pallet 4.

For the same reasons discussed above, in this case too, the wall 19 suffers no knocks. Preferably, the opposite extremity 51 of the above-mentioned free extremity 15 of the fixed jaw 13, comprises a rounded shape to prevent it, during lifting, from knocking against a product badly arranged inside the wall 19 and causing the latter to fall.

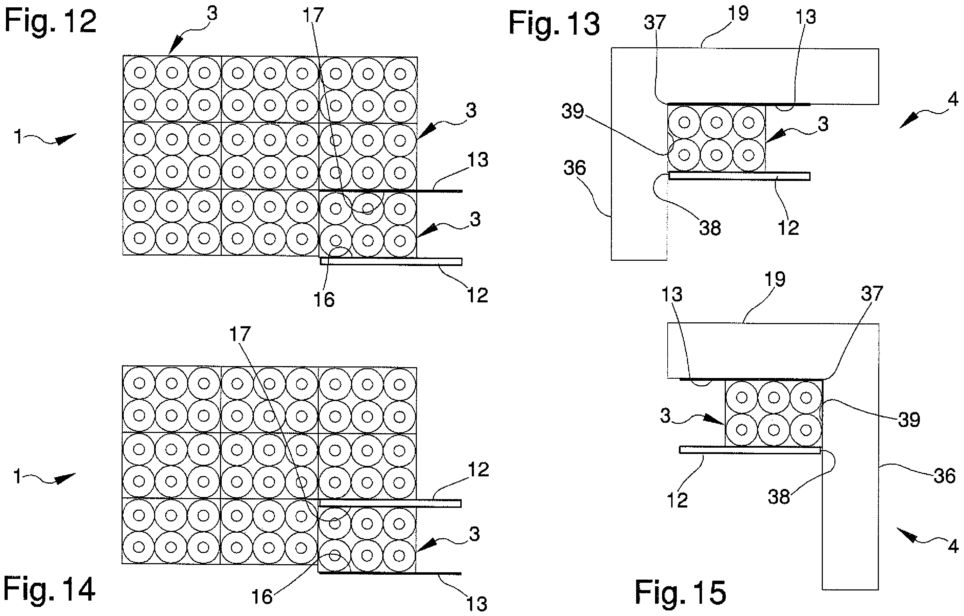

The method of the invention then provides for further preferential solutions for the case wherein the load position is at an internal angle, e.g., right-angle, formed by a first and by a second wall of products 19, 36 arranged substantially in an L shape (see figures 13 and 15).

In this case, the problem can arise whereby, though avoiding any knocking against the first wall 19 during the loading phase, thanks to the implementation of the above-mentioned phases, the gripper knocks against the second wall 36 with the extremity edges of the jaws.

To prevent this, during pickup from the source pallet 1, the gripper 11 takes the pack 3 so that at least an extremity of the gripper itself, defined by the extremity edges of the jaws 37, 38 turned in the same direction, does not protrude from at least one of the two opposite sides 39 of the pack 3, which are orthogonal to the above-mentioned grip sides 16, 17, which hereinafter will be called first orthogonal side 39.

In practice, the gripper 11 has been designed to take packs 3 of different size; it can thus occur that the packs 3 of a given source pallet 1 have shorter grip sides 16, 17 than the gripper 11, i.e., shorter than its jaws 12, 13.

This situation can occur when the gripper 11 picks up e.g. a pack 3 made up of six half-litre bottles.

In this case, if the pack 3 were taken so that both extremities of the gripper 11 protrude from its orthogonal sides 39 to the grip sides 16, 17, then it would be unable to convey the pack 3 to a load position situated in said internal angle of the walls 19, 36, without risking collision between the jaws 12, 13 and second wall 36.

Therefore, having picked up the pack 3 in the way explained above, the gripper 11 then places it in the load position positioned with its first orthogonal side 39 facing and adjacent to the second wall 36.

This way, the thin fixed jaw 13 and the first orthogonal side of the pack 3 find themselves positioned on the perimeter sides of the load position and facing the first and the second walls 19, 36 of products respectively.

After this, the mobile jaw 12 is moved away and the gripper 11 is moved away from the client pallet 4 as explained above, obviously leaving the pack 3 loaded.

As has been said, the gripper 11 can rotate around the above vertical central axis L, so as to correctly direct it according to the arrangement of the walls 19, 36 on the client pallet 4.

The thinner jaw 13 must however always be adjacent to one of the two walls 19, 36, during loading onto the client pallet 4, and such jaw 13 is also parallel to the loaded pack 3.

Consequently, depending which wall has to be parallel to the pack 3 following loading, here called "first wall" 19, the grip mode of the pack 3 during pickup from the source pallet 1 will vary.

In practice, such grip is made according to the following rules.

If, as shown in figure 13, the first wall 19 and the second wall 36 are to the left and right respectively of the internal angle (i.e., the concave angle) then, during pickup, the thinner jaw 13 is forcibly fitted between the above second grip side 17 of the pack to be picked up and the above different pack 3, i.e., the previously mentioned adjacent pack (see figure 12).

If, on the other hand, as shown in figure 15, the first wall 19 and the second wall 36 are the right side and the left side respectively of the angle, then the thicker jaw 12 will be the one forcibly fitted between the second grip side 17 of the pack to be picked up and the different pack 3 defined above (see figure 14).

As said above, when the layers of the source pallet 1 are intercalated by separation elements 8 like the aforementioned sheets of cardboard, which nearly always occurs every time all the shrink-wrapped plastic bottles 2 initially loaded on one of such separation elements 8 have been repalletized, the separation element 8 is removed and placed in a collection seat.

This way, the layer of underlying bottles 2 is made accessible from above.

To do this, a suction grip device 24 can be provided, connected to a vacuum source, carried by the robot 9 and associated with the gripper 11, which device is used in the following way.

The suction grip device 24 is moved at the separation element 8 to be removed, i.e., at its upper surface, which is accessible, and is then operated so as to fasten onto the separation element 8 itself by suction (as shown in figure 8).

After this, the suction grip device 24 is lifted so as to drag with it said separation element 8 and bring it at the collection seat, where it is left, following the deactivation of the device 24 itself.

This suction grip device 24 can e.g. be fitted on the gripper 11, either fixed or mobile with respect to this; in the second case it can be moving in translation (as in the case of figures 1 - 9) or in rotation (as in figure 10, as will be detailed when describing the appliance 11, 24, 25, 31 of the invention).

To determine the identification phase of the pack 3 to be picked up, it may be very important to determine beforehand the arrangement of all the packs in the layer accessible from above.

This way, the above processing unit is able to know both the exact position of each pack 3 of the layer, and their position, and can therefore suitably command the handling means 9, 11, so they are arranged from time to time in the best configuration for picking up the identified pack 3.

For such purpose, an image acquisition device 25 can be provided, e.g., having a camera 29 or other similar means, carried by said robot 9, associated with said gripper 11 and connected to the processing unit.

In practice, the acquisition device 25 is arranged above the layer, before or during the several times mentioned identification phase, so as to determine the arrangement of the packs 3 (see figure 9), communicating this to the processing unit which will use such information in the subsequent phases when commanding the handling means 9, 11 for gripping.

Preferably, for encumbrance reasons, with special reference to the critical aspect of the presence of walls 19 of products on the client pallets 4, the acquisition device 25 is fitted sliding with respect to the gripper 11, so as to be able to move between a position of use, shown in figure 9, wherein it protrudes overhanging in a semi-plane defined by the fixed jaw 13, which does not include the other jaw 12, and a retracted position, shown in figures 1 - 8 and 11, wherein it is mostly arranged in the other semi-plane.

In practice, the acquisition device 25 can be, e.g., fitted in a fixed frame 26 with respect to the above-mentioned attachment member 9, and be, at the bottom, equipped with a connection means 27 fixable in a releasable way to a corresponding connection means 28 fixed above the gripper 11 (and in fact, in figure 10, the gripper 11 and the suction grip device 24 are shown separated from the acquisition device 25).

In detail, the aforementioned connection means 27, 28 together define an automatic tool-changing device for robots, in itself known.

Different configurations are nevertheless possible as regards the connection between robot 9, gripper 11, suction grip device 24 and acquisition device 25.

According to an optional aspect of the invention, a touch probe device 31 is made available associated with the gripper 11 and connected to the processing unit 3.

In particular, the touch probe device 31 can be fitted on the suction grip device 24, e.g., in a median position with respect to its suction cups 32.

Such touch probe device (hereinafter simply "feeler" 31) can be used in cooperation with the acquisition device 25 to detect the arrangement of the packs 3 of the accessible layer, so as to implement the identification phase, according to the procedure explained below.

The feeler 31 of the invention comprises a particular type of "stylus" having a substantially plate shape, for reasons that will be explained in the following paragraphs, and which will here be called "abutment element" 33.

In practice, the feeler 31 is a measuring instrument which provides the amount of movement completed by the abutment element 33 before abutting with an obstacle. Such abutment element 33 is meant to touch the packs 3 with its edge 34 (or side) which is not sharp and is of limited thickness, in detail less than the distance between two caps of the bottles 2 of a pack 3.

The abutment element 33 is nevertheless thick enough not to tear the film wrapped around the bottles 2 of a pack 3, when it abuts it.

The abutment element 33, being plate shaped, substantially defines a lying plane, along which it is mobile in translation for the purposes of taking the measurements for which it was designed.

After the acquisition device 25 has provided the image of the view from above of the layer, the processing unit has at least at disposal the arrangement of the bottles 2 inside the layer (substantially a piece of information corresponding to their Cartesian coordinates) but it can occur that the information relating to the border line between packs 3 is imprecise or cannot be detected due to the limits of current optical technology or of the identification software.

The use of the feeler 31 overcomes such limits by exploiting three data.

The first datum consists of the size of the packs 3 of the source pallet 1, i.e., the number of bottles 2 making up the longer side and those that form the shorter side of the packs 3 present in each layer.

The second datum is the fact that, while the bottles 2 of a given pack 3 are connected at the top by the respective film, between bottles 2 of adjacent packs 3 is defined, in the proximity of the top, the forementioned flaring 18.

Consequently, by positioning the feeler 31 above a perimeter pack 3 at a distance from the edge of the layer (i.e., one of the sides of the pallet 1) corresponding to the number of bottles 2 of the shorter side of the packs 3 and then operating the feeler 31 itself, the information is obtained of the direction of this pack 3.

In fact, if the feeler 31 measures a short movement of its abutment element 33, this means that the edge 34 of the latter has encountered the film of the pack 3, while if it measures a long movement, this means it has reached the bottom of the flaring 18.

In the first case, the length of the pack 3 is perpendicular to the abutment element 33, while in the second case it is parallel to this and these two cases correspond to the only two possible orientations of the pack 3.

The third datum is the fact that the size of the packs 3 and of the pallet 1 univocally determine the arrangement of the packs 3 in the layers; consequently the knowledge of the orientation of one of the packs 3 automatically implies the knowledge of the orientation of all the other packs 3 of the same layer.

Consequently, by using the feeler 31 in the way explained above, it is possible, with a single measurement operation, to determine the arrangement of all the packs 3 of a layer and, if all the layers of the pallet 1 are the same, of all the packs 3 of the pallet 1. In the event of its not being known whether the different layers are the same, as regards the arrangement of the packs 3, then it will be enough to take a single measurement per layer, to be able to successfully implement the proposed method. The feeler 31 can also be used to detect the exact distance off the ground of the layer from time to time accessible from above and of the above-mentioned separation elements 8.

In fact, in order to correctly pick up the packs 3 and remove said separation elements 8, besides the general information regarding their height, already known but in a rather rough way, it could be useful to also have a fine measurement.

By placing the feeler 31 at a predetermined height, and then measuring the amount of movement of the abutment element 33 to touch the top of the layer or of the separation elements 8, their exact height is automatically obtained.

The appliance 11, 24, 25, 31 of the invention is described herein below.

The proposed appliance 11, 24, 25, 31 is specifically designed for the repalletizing of shrink-wrapped plastic bottles 2, i.e., it has been designed to implement the method explained above.

The appliance 11, 24, 25, 31 can be fitted on said anthropomorphous robot, at the distal extremity 9 of the articulated arm.

The proposed appliance 11, 24, 25, 31 first of all comprises a gripper 11, configured as already explained in detail above, during the description of the method of the invention.

Furthermore, the appliance 11, 24, 25, 31 comprises both the above-mentioned acquisition device 25 and the touch probe device 31.

The characteristics concerning the gripper 11, the acquisition device 25 and the feeler 31, introduced and discussed above in relation to the method, just like their preferential or optional versions indicated above, apply in the same identical way to the appliance 11, 24, 25, 31 of the invention and are not therefore repeated.

The operation of the appliance 11, 24, 25, 31 is such as to implement the proposed method and it has therefore already been duly explained during the description of the latter.

In particular, it should be noticed that the acquisition device 25 is fitted retracting on the above-mentioned support frame 26, as explained above in greater detail, and can include, besides the above camera 29, also lighting means 50, e.g., made up of a luminous panel.

Preferably, the appliance 11, 24, 25, 31 comprises the suction grip device 24, whose structure and operation have been described previously.

The particular embodiment in the figure 10 envisages a version of the suction grip device 24, wherein it comprises a support arm 35, e.g., with a V or elbow shape, which bears the above-mentioned suction cups 32 and is suitable for rotating with respect to the gripper 11 between a work position and an inactive position.

In this case, the arm 35 can also bear the touch probe device 31.

In the particular embodiment shown in figure 11, as already mentioned above, all the components of the appliance 11, 24, 25, 31, apart from the thinner jaw 13, are arranged in just one of the two semi-planes defined by the front surface F on which such jaw 13 lies.

It has in fact been ascertained how the described invention achieves the proposed objects and in particular the fact is underlined that it makes available a method and an appliance 11, 24, 25, 31 to repalletize shrink-wrapped plastic bottles which enable third-party warehouses to do without secondary warehouses and palletizing labor.

## Claims

1. Method for repalletizing shrink-wrapped packs of plastic bottles (2), **characterised by** the following steps:
a. providing at least a source pallet (1) comprising at least one layer, made up of a plurality of shrink-wrapped packs (3) of bottles (2) and accessible from the top;
b. providing at least a client pallet (4), on which a number of packs (3) of bottles (2) has to be loaded, taken from said source pallet (1);
c. providing handling means comprising an anthropomorphous robot (9) and a gripper (11), carried by said robot (9) and equipped with two plate-shaped jaws (12, 13);
d. identifying in said layer a pack (3) to pick up, which has opposite grip sides (16, 17);
e. arranging said gripper (11) above said pack (3);
f. lowering said gripper (11) and gripping said pack (3) with said gripper (11), according to the following rule: if said pack (3) to pick up has a first free grip side (16) and a second grip side (17) adjacent to a different pack (3), then a jaw (13), during the descent movement of the gripper (11), is forcibly fitted between said second side (17) and said different pack (3), wherein the forceful thrust of the jaw (13) between the pack (3) to be picked up and an adjacent one produces a small divarication between these packs (3) and singularizes the pack (3) to be picked up, and the other jaw (12) abuts against said first side (16), so as to clasp the pack (3) to pick up in the gripper (11); if said pack (3) to pick up has both grip sides (16, 17) free, then each jaw (12, 13) abuts a respective grip side (16, 17), so as to clasp the pack (3) in the gripper (11);
g. lifting said pack (3) and carrying it by said client pallet (4);
h. identifying a load position in said client pallet (4) where arranging said pack (3);
i. placing said pack (3) in said load position; and
j. if said number of packs (3) is more than one, repeating the steps from d. to i. until reaching said number.

2. Method according to claim 1, **characterized in that**, when the source pallet (1) comprises a plurality of superimposed layers, the steps from d. to i. are systematically repeated and applied to the packs of plastic bottles (2) of each layer, repalletizing all the packs (3) of a layer accessible from the top before moving on to the layer immediately below, starting from the top layer up to the bottom layer.

3. Method according to one or more of the preceding claims, **characterized in that**, when said load position is arranged alongside a group of products piled on said client pallet (4), so as to define a wall (19) of products, the step i. comprises the following actions:
k. said pack (3) is arranged in an inclined configuration, in which it has a grip side (17) closer to said wall (19), and a grip side (16) farther to it, both lying on an oblique plane with respect to said wall (19), and in which said pack (3) touches said client pallet (4) only along one of its corners (20) at the bottom of said farther grip side (16), so that said corner (20) is substantially parallel to said wall (19); then
1. said pack (3) rotates towards said wall, until arranging itself with said grip sides (16, 17) parallel to said wall (19), so as to rest free in said load position.

4. Method according to claim 3, **characterized in that** said action 1. of the step i. is carried out as follows: said jaw (13) against said farther grip side (16) of the pack (3) moves away from said grip side (16), then the gripper (11) is lifted, releasing the other jaw (13) from said closer side (17), so as to allow said pack (3) to rotate by gravity towards said wall (19) until stopping itself resting in said load position.

5. Method according to one or more of the preceding claims, **characterized in that** a gripper (11) is used which has a thicker jaw (12) and a thinner jaw (13).

6. Method according to one or more of the preceding claims, **characterized in that**, when said load position is arranged alongside a group of products piled on said client pallet (4), so as to define a first wall of products (19), the phase i. comprises the following actions:
m. arranging said gripper (11) above the load position, directed so that a first jaw (13) of said gripper (11) is arranged in a substantially vertical plane adjacent to that of a face (23) of said first wall (19);
n. lowering in vertical said gripper (11) to place said pack (3) in said load position;
o. moving away a second jaw (12) opposite the first one from said pack (3), releasing it; and
p. lifting vertically said gripper (11) leaving the pack (3) on said client pallet (4).

7. Method according to claims 5 and 6, **characterized in that** said first jaw (13) is the thin jaw and said second jaw (14) is the thick jaw.

8. Method according to one or more of the preceding claims, **characterized in that**, in step f., the gripper grips said pack (3) so that at least one of its extremities (37, 38) does not protrude from at least a first side (39) of said pack (3) orthogonal to said grip sides (16, 17).

9. Method according to claim 8, **characterized in that**, in case said packs (3) to pick up have shorter grip sides than said gripper (11), if said load position is at an inner corner made up of said first wall (19) of products and a second wall (36) of products, defined by respective groups of products piled on said client pallet (4), then, in step i., said pack (3) rests and is left in the load position directed with said first orthogonal side (39) facing said second wall (36).

10. Method according to claims 7, 8 and 9, **characterized in that**:
- if said first wall (19) and said second wall (36) are the left and right side respectively of said corner then, during the step f., said thinner jaw (13) is forcibly fitted between said second grip side (17) of the pack to pick up and said different pack (3); and
- if said first wall and said second wall (19, 36) are the right and left side respectively of said corner then, during the step f., said thicker jaw (13) is forcibly fitted between said second grip side (17) of the pack to pick up and said different pack (3).

11. Method according to one or more of claims from 2 to 10, **characterized in that**, when said layers are separated by sheet-shaped separation elements (8), each time all the packed plastic bottles (2) loaded on one of said separation elements (8) have been repalletized, the latter is removed from said source pallet (1) and placed in a collection seat.

12. Method according to claim 11, **characterized by** providing a suction grip device (24), carried by said robot (9) and associated with said gripper (11), used to remove said separation element (8) as follows: said suction grip device (24) is brought at said separation element (8), then it is activated so as to fasten said separation element (8), then it is lifted so as to drag said separation element (8) with it and carry it at said seat, where it is left, following the de-activation of said suction grip device (24).

13. Method according to one or more of the preceding claims, **characterized by** providing an image acquisition device (25) carried by said robot (9), associated with said gripper (11) and connected to a processing unit which controls said robot (9) and said gripper (11), said acquisition device (25) being arranged above said layer, before step e., so as to detect the arrangement of said packs (3) in said layer, said arrangement being used by said unit to carry out step d.

14. Method according to one or more of the preceding claims, **characterized by** providing a touch probe device (31) associated with said gripper (11) and connected to a processing unit (3) which controls said robot (9), said touch probe device (31) being arranged above said layer, before step e., and used to detect the arrangement of said packs (3) in said layer, which arrangement is used by said unit (3) to carry out step d.

15. Method according to claim 14, **characterized in that** said touch probe device (31) is used to detect the distance from the ground of said layer and of said separation elements (8).

## Patentansprüche

1. Verfahren zum Umpalettieren von in Schrumpffolie verpackten Packungen von Kunststoffflaschen (2), **gekennzeichnet durch** die folgenden Schritte:
a. Bereitstellen mindestens einer Ursprungspalette (1), die mindestens eine Schicht umfasst, die von mehreren in Schrumpffolie verpackten Packungen (3) von Flaschen (2) gebildet wird und von oben zugänglich ist;
b. Bereitstellen mindestens einer Kundenpalette (4), auf die eine Anzahl von Packungen (3) von Flaschen (2), die von der Ursprungspalette (1) genommen werden, geladen werden soll;
c. Bereitstellen von Handhabungsmitteln, die einen anthropomorphen Roboter (9) und einen Greifer (11), der von dem Roboter (9) getragen wird und mit zwei plattenförmigen Klauen (12, 13) ausgestattet ist, umfassen;
d. Identifizieren einer Packung (3), die aufgenommen werden soll und die gegenüberliegende Greifseiten (16, 17) aufweist, in der Schicht;
e. Anordnen des Greifers (11) über der Packung (3);
f. Absenken des Greifers (11) und Ergreifen der Packung (3) mit dem Greifer (11) gemäß der folgenden Regel: wenn die Packung (3), die aufgenommen werden soll, eine erste freie Greifseite (16) und eine zweite Greifseite (17), die einer anderen Packung (3) benachbart ist, aufweist, dann wird eine Klaue (13) während der Abwärtsbewegung des Greifers (11) zwischen die zweite Seite (17) und die andere Packung (3) gezwängt, wobei das Hineinzwängen der Klaue (13) zwischen die aufzunehmende und eine benachbarte Packung (3) eine kleine Aufspreizung zwischen diesen Packungen (3) bewirkt und die Packung (3), die aufgenommen werden soll, vereinzelt, und wobei die andere Klaue (12) an der ersten Seite (16) anliegt, um die Packung (3), die aufgenommen werden soll, in dem Greifer (11) festzuhalten; wenn bei der Packung (3), die aufgenommen werden soll, beide Greifseiten (16, 17) frei sind, dann liegt jede Klaue (12, 13) an einer entsprechenden Greifseite (16, 17) an, um die Packung (3) in dem Greifer (11) festzuhalten;
g. Anheben der Packung (3) und Tragen derselben zu der Kundenpalette (4);
h. Identifizieren einer Ladeposition in der Kundenpalette (4), an der die Packung (3) angeordnet werden soll;
i. Anordnen der Packung (3) an der Ladeposition; und
j. wenn die Anzahl an Packungen (3) mehr als eins beträgt, Wiederholen der Schritte d. bis i., bis die Anzahl erreicht ist.

2. Verfahren nach Anspruch 1, **dadurch gekennzeichnet, dass**, wenn die Ursprungspalette (1) mehrere übereinander angeordnete Schichten umfasst, die Schritte d. bis i. systematisch wiederholt und auf die Packungen von Kunststoffflaschen (2) jeder Schicht angewendet werden, wobei alle Packungen (3) einer Schicht, die von oben zugänglich sind, umpalletiert werden, bevor zur unmittelbar darunter liegenden Schicht übergegangen wird, beginnend bei der obersten Schicht und bis zur untersten Schicht.

3. Verfahren nach einem oder mehreren der vorhergehenden Ansprüche, **dadurch gekennzeichnet, dass**, wenn die Ladeposition entlang einer Gruppe von Produkten angeordnet ist, die auf der Kundenpalette (4) gestapelt sind, um eine Wand (19) aus Produkten zu definieren, der Schritt i. die folgenden Vorgänge umfasst:
k. die Packung (3) wird in einer geneigten Stellung angeordnet, in der eine Greifseite (17) sich näher an der Wand (19) und eine Greifseite (16) sich ferner von derselben befindet, wobei beide bezogen auf die Wand (19) auf einer schrägen Ebene liegen, und in der die Packung (3) die Kundenpalette (4) nur entlang einer ihrer Ecken (20) unten an der ferneren Greifseite (16) berührt, so dass die Ecke (20) im Wesentlichen parallel zu der Wand (19) ist; dann
I. die Packung (3) sich hin zu der Wand dreht, bis sie sich mit den Greifseiten (16, 17) parallel zu der Wand (19) anordnet, um an der Ladeposition frei aufzuliegen.

4. Verfahren nach Anspruch 3, **dadurch gekennzeichnet, dass** der Vorgang I. von Schritt i. wie folgt durchgeführt wird: die Klaue (13) an der ferneren Greifseite (16) der Packung (3) bewegt sich von der Greifseite (16) weg, dann wird der Greifer (11) angehoben, wobei die andere Klaue (13) von der näheren Seite (17) gelöst wird, um zuzulassen, dass die Packung (3) sich durch die Schwerkraft hin zu der Wand (19) dreht, bis sie sich selbst an der Ladeposition aufliegend anhält.

5. Verfahren nach einem oder mehreren der vorhergehenden Ansprüche, **dadurch gekennzeichnet, dass** ein Greifer (11) benutzt wird, der eine dickere Klaue (12) und eine dünnere Klaue (13) aufweist.

6. Verfahren nach einem oder mehreren der vorhergehenden Ansprüche, **dadurch gekennzeichnet, dass**, wenn die Ladeposition entlang einer Gruppe von Produkten angeordnet ist, die auf der Kundenpalette (4) gestapelt sind, um eine erste Wand aus Produkten (19) zu definieren, die Phase i. die folgenden Vorgänge umfasst:
m. Anordnen des Greifers (11) über der Ladeposition, derart ausgerichtet, dass eine erste Klaue (13) des Greifers (11) in einer im Wesentlichen vertikalen Ebene, die derjenigen einer Seite (23) der ersten Wand (19) benachbart ist, angeordnet ist;
n. vertikales Absenken des Greifers (11), um die Packung (3) an der Ladeposition anzuordnen;
o. Wegbewegen einer zweiten Klaue (12), die der ersten gegenüberliegt, von der Packung (3) und dabei Freigeben derselben; und
p. vertikales Anheben des Greifers (11) und dabei Belassen der Packung (3) auf der Kundenpalette (4).

7. Verfahren nach den Ansprüchen 5 und 6, **dadurch gekennzeichnet, dass** die erste Klaue (13) die dünne Klaue und die zweite Klaue (14) die dicke Klaue ist.

8. Verfahren nach einem oder mehreren der vorhergehenden Ansprüche, **dadurch gekennzeichnet, dass** in Schritt f. der Greifer die Packung (3) derart ergreift, dass mindestens eines seiner äußersten Enden (37, 38) nicht von mindestens einer ersten Seite (39) der Packung (3) vorsteht, die rechtwinklig zu den Greifseiten (16, 17) ist.

9. Verfahren nach Anspruch 8, **dadurch gekennzeichnet, dass**, im Fall, dass die Packungen (3), die aufgenommen werden sollen, kürzere Greifseiten aufweisen als der Greifer (11), wenn die Ladeposition sich an einer inneren Ecke befindet, die von der ersten Wand (19) aus Produkten und einer zweiten Wand (36) aus Produkten gebildet wird, die durch entsprechende Gruppen von Produkten definiert werden, die auf der Kundenpalette (4) gestapelt sind, dann in Schritt i. die Packung (3) mit der ersten rechtwinkligen Seite (39) zu der zweiten Wand (36) weisend ausgerichtet in der Ladeposition aufliegt und in derselben belassen wird.

10. Verfahren nach den Ansprüchen 7, 8 und 9, **dadurch gekennzeichnet, dass**:
- wenn die erste Wand (19) und die zweite Wand (36) entsprechend die linke und rechte Seite der Ecke sind, dann während Schritt f. die dünnere Klaue (13) zwischen die zweite Greifseite (17) der Packung, die aufgenommen werden soll, und die andere Packung (3) gezwängt wird; und
- wenn die erste Wand und die zweite Wand (19, 36) entsprechend die rechte und linke Seite der Ecke sind, dann während Schritt f. die dickere Klaue (13) zwischen die zweite Greifseite (17) der Packung, die aufgenommen werden soll, und die andere Packung (3) gezwängt wird.

11. Verfahren nach einem oder mehreren der Ansprüche 2 bis 10, **dadurch gekennzeichnet, dass**, wenn die Schichten durch flächig ausgebildete Trennelemente (8) getrennt sind, jedes Mal, wenn alle gepackten Kunststoffflaschen (2), die auf eines der Trennelemente (8) geladen sind, umpalletiert wurden, das Letztgenannte von der Ursprungspalette (1) entfernt und in einer Sammelaufnahme angeordnet wird.

12. Verfahren nach Anspruch 11, **gekennzeichnet durch** Bereitstellen einer Sauggreifvorrichtung (24), die von dem Roboter (9) getragen wird und dem Greifer (11) zugeordnet ist und benutzt wird, um das Trennelement (8) wie folgt zu entfernen: die Sauggreifvorrichtung (24) wird zu dem Trennelement (8) gebracht, dann wird sie aktiviert, um das Trennelement (8) zu befestigen, dann wird sie angehoben, um das Trennelement (8) mit sich zu ziehen und es zu der Aufnahme zu tragen, wo es nach der Deaktivierung der Sauggreifvorrichtung (24) belassen wird.

13. Verfahren nach einem oder mehreren der vorhergehenden Ansprüche, **gekennzeichnet durch** Bereitstellen einer Bilderfassungsvorrichtung (25), die von dem Roboter (9) getragen wird und dem Greifer (11) zugeordnet ist und mit einer Verarbeitungseinheit verbunden ist, die den Roboter (9) und den Greifer (11) steuert, wobei die Erfassungsvorrichtung (25) vor Schritt e. über der Schicht angeordnet wird, um die Anordnung der Packungen (3) in der Schicht zu erfassen, wobei die Anordnung von der Einheit benutzt wird, um Schritt d. durchzuführen.

14. Verfahren nach einem oder mehreren der vorhergehenden Ansprüche, **gekennzeichnet durch** Bereitstellen einer Berührungssondenvorrichtung (31), die dem Greifer (11) zugeordnet und mit einer Verarbeitungseinheit (3) verbunden ist, die den Roboter (9) steuert, wobei die Berührungssondenvorrichtung (31) vor Schritt e. über der Schicht angeordnet wird und benutzt wird, um die Anordnung der Packungen (3) in der Schicht zu erfassen, wobei die Anordnung von der Einheit (3) benutzt wird, um Schritt d. durchzuführen.

15. Verfahren nach Anspruch 14, **dadurch gekennzeichnet, dass** die Berührungssondenvorrichtung (31) benutzt wird, um den Abstand der Schicht und der Trennelemente (8) vom Boden zu erfassen.

## Revendications

1. Procédé de repalettisation de packs de bouteilles en plastique emballés sous film rétractable (2), **caractérisé par** les étapes suivantes :
a. fournir au moins une palette source (1) comprenant au moins une couche, constituée d'une pluralité de packs emballés sous film rétractable (3) de bouteilles (2) et accessible depuis le haut ;
b. fournir au moins une palette client (4), sur laquelle un nombre de packs (3) de bouteilles (2) est à charger, prélevé depuis ladite palette source (1) ;
c. fournir des moyens de manutention comprenant un robot anthropomorphe (9) et un organe de préhension (11), porté par ledit robot (9) et équipé de deux mors en forme de plaque (12, 13) ;
d. repérer dans ladite couche un pack (3) à prélever, possédant des faces de préhension opposées (16, 17) ;
e. agencer ledit organe de préhension (11) au-dessus dudit pack (3) ;
f. abaisser ledit organe de préhension (11) et saisir ledit pack (3) à l'aide dudit organe de préhension (11), selon la règle suivante : si ledit pack (3) à prélever a une première face de préhension libre (16) et une seconde face de préhension (17) adjacente à un pack différent (3), alors un mors (13), lors du mouvement de descente de l'organe de préhension (11), est introduit en force entre ladite seconde face (17) et ledit pack différent (3), dans lequel la poussée énergique du mors (13) entre le pack (3) à prélever et un pack adjacent entraîne un petit écartement entre ces packs (3) et isole le pack (3) à prélever, et l'autre mors (12) vient en butée contre ladite première face (16), de manière à enserrer le pack (3) à prélever dans l'organe de préhension (11) ; si ledit pack (3) à prélever a les deux faces de préhension (16, 17) libres, alors chaque mors (12, 13) vient en butée contre une face de préhension respective (16, 17), de manière à enserrer le pack (3) dans l'organe de préhension (11) ;
g. soulever ledit pack (3) et le porter auprès de ladite palette client (4) ;
h. repérer un emplacement de chargement dans ladite palette client (4) où agencer ledit pack (3) ;
i. placer ledit pack (3) dans ledit emplacement de chargement ; et
j. si ledit nombre de packs (3) est supérieur à un, répéter les étapes de d. à i. jusqu'à atteindre ledit nombre.

2. Procédé selon la revendication 1, **caractérisé en ce que**, lorsque la palette source (1) comprend une pluralité de couches superposées, les étapes de d. à i. sont systématiquement répétées et appliquées aux packs de bouteilles en plastique (2) de chaque couche, repalettisant tous les packs (3) d'une couche accessible depuis le haut avant de passer à la couche immédiatement en dessous, en commençant par la couche du haut jusqu'à la couche du bas.

3. Procédé selon l'une ou plusieurs des revendications précédentes, **caractérisé en ce que**, lorsque ledit emplacement de chargement est agencé à côté d'un groupe de produits empilés sur ladite palette client (4), de manière à définir un mur (19) de produits, l'étape i. comprend les actions suivantes :
k. ledit pack (3) est agencé dans une configuration inclinée, dans laquelle il a une face de préhension (17) plus proche dudit mur (19), et une face de préhension (16) plus loin de celui-ci, se trouvant tous les deux sur un plan oblique par rapport audit mur (19), et dans laquelle ledit pack (3) touche ladite palette client (4) uniquement le long de l'une de ses arêtes (20) en partie basse de ladite face de préhension plus éloignée (16), de telle manière que ladite arête (20) est sensiblement parallèle audit mur (19) ; puis
1. ledit pack (3) tourne en rotation vers ledit mur, jusqu'à s'agencer avec lesdites faces de préhension (16, 17) parallèles audit mur (19), de manière à reposer librement dans ledit emplacement de chargement.

4. Procédé selon la revendication 3, **caractérisé en ce que** ladite action 1. de l'étape i. est effectuée de la façon suivante : ledit mors (13) contre ladite face de préhension plus éloignée (16) du pack (3) s'éloigne de ladite face de préhension (16), ensuite l'organe de préhension (11) est soulevé, libérant l'autre mors (13) de ladite face rapprochée (17), afin de permettre audit pack (3) de tourner en rotation par gravité vers ledit mur (19) jusqu'à s'arrêter reposant en appui dans ledit emplacement de chargement.

5. Procédé selon l'une ou plusieurs des revendications précédentes, **caractérisé en ce qu'**un organe de préhension (11) est utilisé qui possède un mors plus épais (12) et un mors plus mince (13).

6. Procédé selon l'une ou plusieurs des revendications précédentes, **caractérisé en ce que**, lorsque ledit emplacement de chargement est agencé à côté d'un groupe de produits empilés sur ladite palette client (4), de manière à définir un premier mur de produits (19), la phase i. comprend les actions suivantes :
m. agencer ledit organe de préhension (11) au-dessus de l'emplacement de chargement, orienté de telle manière qu'un premier mors (13) dudit organe de préhension (11) est agencé dans un plan sensiblement vertical adjacent à celui d'une face (23) dudit premier mur (19) ;
n. abaisser verticalement ledit organe de préhension (11) pour placer ledit pack (3) dans ledit emplacement de chargement ;
o. éloigner un second mors (12) opposé au premier dudit pack (3), le libérant ; et
p. monter verticalement ledit organe de préhension (11) en laissant le pack (3) sur ladite palette client (4).

7. Procédé selon les revendications 5 et 6, **caractérisé en ce que** ledit premier mors (13) est le mors mince et ledit second mors (14) est le mors épais.

8. Procédé selon l'une ou plusieurs des revendications précédentes, **caractérisé en ce que**, à l'étape f. l'organe de préhension saisit ledit pack (3) de telle manière qu'au moins l'une de ses extrémités (37, 38) ne dépasse pas au moins une première face (39) dudit pack (3) orthogonale auxdites faces de préhension (16, 17).

9. Procédé selon la revendication 8, **caractérisé en ce que**, au cas où lesdits packs (3) à prélever possèdent des faces de préhension plus courtes que ledit organe de préhension (11), si ledit emplacement de chargement se trouve à un angle intérieur constitué par ledit premier mur (19) de produits et un second mur (36) de produits, définis par des groupes respectifs de produits empilés sur ladite palette client (4), alors, à l'étape i., ledit pack (3) repose et est laissé dans l'emplacement de chargement orienté avec ladite première face orthogonale (39) en regard dudit second mur (36).

10. Procédé selon les revendications 7, 8 et 9, **caractérisé en ce que** :
- si ledit premier mur (19) et ledit second mur (36) constituent respectivement les côtés gauche et droit dudit angle alors, lors de l'étape f., ledit mors plus mince (13) est introduit en force entre ladite seconde face de préhension (17) du pack à prélever et ledit pack différent (3) ; et
- si ledit premier mur et ledit second mur (19, 36) constituent respectivement les côtés droit et gauche dudit angle alors, lors de l'étape f., ledit mors plus épais (13) est introduit en force entre ladite seconde face de préhension (17) du pack à prélever et ledit pack différent (3).

11. Procédé selon l'une ou plusieurs des revendications de 2 à 10, **caractérisé en ce que**, lorsque lesdites couches sont séparées par des éléments de séparation (8) en forme de feuille, à chaque fois que toutes les bouteilles en plastique emballées (2) chargées sur l'un desdits éléments de séparation (8) ont été repalettisées, celui-ci est enlevé de ladite palette source (1) et placé dans un siège collecteur.

12. Procédé selon la revendication 11, **caractérisé par** la fourniture d'un dispositif de préhension à ventouses (24), porté par ledit robot (9) et associé audit organe de préhension (11), utilisé pour enlever ledit élément de séparation (8) de la façon suivante : ledit dispositif de préhension à ventouses (24) est amené au niveau dudit élément de séparation (8), ensuite il est activé pour fixer ledit élément de séparation (8), ensuite il est soulevé pour traîner ledit élément de séparation (8) avec lui et le porter au niveau dudit siège, où il est laissé, suite à la désactivation dudit dispositif de préhension à ventouses (24).

13. Procédé selon l'une ou plusieurs des revendications précédentes, **caractérisé par** la fourniture d'un dispositif d'acquisition d'images (25) porté par ledit robot (9), associé audit organe de préhension (11) et relié à une unité de traitement qui commande ledit robot (9) et ledit organe de préhension (11), ledit dispositif d'acquisition (25) étant agencé au-dessus de ladite couche, avant l'étape e., de manière à détecter l'agencement desdits packs (3) dans ladite couche, ledit agencement étant utilisé par ladite unité pour effectuer l'étape d.

14. Procédé selon l'une ou plusieurs des revendications précédentes, **caractérisé par** la fourniture d'un dispositif à sonde de palpage (31) associé audit organe de préhension (11) et relié à une unité de traitement (3) qui commande ledit robot (9), ledit dispositif à sonde de palpage (31) étant agencé au-dessus de ladite couche, avant l'étape e., et utilisé pour détecter l'agencement desdits packs (3) dans ladite couche, lequel agencement est utilisé par ladite unité (3) pour effectuer l'étape d.

15. Procédé selon la revendication 14, **caractérisé en ce que** ledit dispositif à sonde de palpage (31) est utilisé pour détecter la distance depuis le sol de ladite couche et desdits éléments de séparation (8).
